# DEMANDE DE BREVET EUROPEEN

(11) **EP 3 035 182 A1**
(43) Date de publication de la demande: **22.06.2016**
(21) Numéro de dépôt: 15186441.0
(22) Date de dépôt: 23.09.2015
(51) Int. Cl.: G06F 3/0488, G06F 3/01, G06F 3/0484

(54) **SYSTEME D'ENTREE DE DONNEE MULTIMODE**

(30) Priorité: 23.09.2014 FR 1402128
(71) Demandeur: THALES, 92400 Courbevoie (FR)
(72) Inventeur: MANCEAU, Michael, 28200 Chateaudun (FR); POISSON, Didier, 31000 Toulouse (FR); PERBET, Jean-Noël, 33320 Eysines (FR)
(74) Mandataire: Collet, Alain

(57) **Abrégé**

L'invention se rapporte à un système d'entrée de donnée (30) et à un procédé mettant en oeuvre le système (30) comprenant des commandes physiques (12) un capteur d'environnement (18) et un écran tactile (11) affichant des commandes virtuelles, le procédé consistant définir et afficher au moins une commande virtuelle sur l'écran tactile (11) et à affecter une donnée à saisir à une des commandes. Selon l'invention, la donnée à saisir est affectée à la fois à une première des commandes physiques (12) et à une première des commandes virtuelles. On adapte la topologie des commandes virtuelles à des conditions d'environnement.

## Description

Le domaine de l'invention est celui des interfaces homme-machine appelées « IHM » comportant une interface tactile. Ce type de dispositif est maintenant très répandu dans le domaine grand public où sont particulièrement concernés le domaine des téléphones portables ou celui des tablettes tactiles.

Le domaine aéronautique est également concerné par ce type d'interfaces homme-machine qui permet de réaliser une interface simple, robuste et ergonomique. De nombreux cockpits d'aéronefs sont déjà équipés de d'écrans tactiles permettant de saisir et de visualiser des informations. L'avantage majeur des écrans tactiles est de permettre la saisie d'une information à l'endroit de son affichage et donc de minimiser les entrées erronées mais cela impose à l'opérateur de regarder l'écran tactile pour accomplir la saisie.

A bord des aéronefs, on trouve également de nombreuses commandes physiques, comme des interrupteurs, des boutons poussoir, des rotacteurs... permettant également la saisie d'informations. Ces commandes physiques présentent l'avantage de permettre un retour sensoriel lors de leur manipulation. L'utilisateur peut même manipuler la commande sans la regarder. En revanche les commandes physiques ont pour inconvénient d'éloigner la commande de l'information à modifier, l'information étant affichée sur un écran distant de la commande physique.

On a tenté de combiner écran tactile et commande physique en proposant un système d'interfaces programmables telles que des touches ou rotacteurs disposés en périphérie d'une zone d'affichage tactile. L'affectation des commandes physiques varient selon la fonction à accomplir comme par exemple un réglage de volume sonore ou le choix d'une fréquence d'un système radio. Une même commande physique peut être utilisée pour différentes saisies. L'inconvénient principal de ce type de combinaison est qu'il requiert un apprentissage important de l'interface.

D'autres systèmes créent des zones prédéterminées sur lesquelles on peut avoir une action tactile et pour lesquelles on gère la priorité entre les dispositifs tactiles et les commandes physiques. Cela permet de gérer l'affectation d'une zone tactile à une commande. L'inconvénient de cette solution est de figer la zone d'interaction et de ne pas garantir de cohérence entre les commandes tactiles et physiques. Ce type de système requiert aussi un apprentissage important de l'interface.

L'invention vise à pallier tout ou partie des problèmes cités plus haut. L'invention a pour but d'améliorer l'utilisation des interfaces homme machines en proposant à l'utilisateur un système cohérent et intuitif combinant des surfaces tactiles mettant en oeuvre une représentation virtuelle de commandes sur un écran et des commandes physiques. L'interface permet de garantir une utilisation optimale compte tenu de l'environnement dans lequel elle est utilisée, de la tache à accomplir et des performances et préférences de l'utilisateur.

A cet effet, l'invention a pour objet un procédé d'entrée de donnée mettant en oeuvre un système comprenant des commandes physiques, un capteur d'environnement et un écran tactile affichant des commandes virtuelles, le procédé consistant à définir et afficher au moins une commande virtuelle sur l'écran tactile et à affecter une donnée à saisir à une des commandes, caractérisé en ce que la donnée à saisir est affectée à la fois à une première des commandes physiques et à une première des commandes virtuelles et en ce qu'on adapte la topologie des commandes virtuelles à des conditions d'environnement.

Avantageusement, une seconde des commandes virtuelles est affichée à une position prédéfinie de l'écran tactile, position située sensiblement le long d'un bord de l'écran tactile et l'affectation de la donnée est définie au moyen de la seconde des commandes virtuelles.

Le bord de l'écran tactile présente avantageusement un relief permettant à un utilisateur d'y caler un doigt afin de retrouver sur l'écran tactile la position d'une commande virtuelle sans l'obligation de regarder l'écran.

L'écran tactile peut posséder un contour rectangulaire et la seconde des commandes virtuelles est avantageusement affichée sensiblement dans un des coins du contour rectangulaire. Le positionnement d'une commande virtuelle le long d'un bord ou d'un coin associé à la présence du relief facilite pour l'opérateur la manoeuvre de cette commande virtuelle.

La donnée à saisir peut être une donnée continue ou pseudo continue et la commande virtuelle forme un curseur s'étendant avantageusement le long d'un contour de l'écran tactile. L'utilisateur peut alors longer du doigt le contour pour manoeuvrer la commande. Pour un contour rectangulaire, le curseur s'étend alors le long d'un coté du contour de l'écran tactile.

Toujours si la donnée à saisir est une donnée continue ou pseudo continue, la commande physique associée à cette donnée peut comprendre un bouton rotatif. L'utilisateur a alors le choix entre un curseur virtuel et un bouton rotatif pour saisir la donnée.

L'invention a également pour objet un système comprenant un calculateur, des commandes physiques, un capteur d'environnement et un écran tactile affichant des commandes virtuelles, les commandes physiques et l'écran tactile étant reliés au calculateur, caractérisé en ce que le calculateur est configuré pour mettre en oeuvre un moteur d'inférence définissant des règles contextuelles d'affectation des commandes à des données à saisir, au moins une des données à saisir étant affectée à la fois à une première des commandes physiques et à une première des commandes virtuelles et en ce que le calculateur est configuré pour adapter la topologie des commandes virtuelles à des conditions d'environnement mesurées par le capteur d'environnement.

Avantageusement, le calculateur est configuré pour mettre en oeuvre un bloc de mémorisation topologique recensant les différentes commandes du système ainsi que leur position.

Le bloc de mémorisation topologique mémorise avantageusement des positions de commandes virtuelles situées sensiblement le long d'un bord de l'écran tactile.

Avantageusement le calculateur est configuré pour mettre en oeuvre un bloc de mémorisation d'actions définissant les actions à entreprendre en fonction de la valeur de chaque donnée saisie. Le bloc de mémorisation d'actions fonctionne alors à partir de schèmes définis comme des structures ou des organisations des actions pouvant se transformer ou se généraliser lors de la répétition d'actions en des circonstances semblables ou analogues.

Par commande physique, on entend tout moyen d'entrée de donnée possédant un élément mobile qu'un opérateur peut déplacer par rapport à un élément fixe afin de saisir une donnée. A titre d'exemple, une commande physique peut être formée par une commande binaire telle qu'un bouton poussoir ou un interrupteur à levier, le bouton ou l'interrupteur pouvant être simple ou double effet. Les commandes binaires peuvent être regroupées dans un clavier physique. La commande physique peut également être formée par une commande continue ou pseudo continue telle qu'un potentiomètre à glissière ou rotatif, un rotacteur pilotant des contacts électriques ou un codeur optique.

Par commande virtuelle, on entend une commande réalisée à partir de l'écran tactile. Ces commandes peuvent également être binaires ou continues (ou pseudo continues). Les commandes virtuelles sont formées de zones de l'écran tactile qu'un utilisateur est amené à toucher pour saisir une donnée. Les commandes virtuelles sont définies par un logiciel gérant l'écran tactile. Le logiciel définit des zones de l'écran formant des commandes, la taille des zones étant compatible avec une taille standard de doigt d'un utilisateur. Le logiciel définit également la fonction remplie par chaque commande. L'écran tactile affiche une représentation graphique de la commande virtuelle. La représentation peut être fonctionnelle, par exemple en représentant l'image d'un bouton sur lequel l'utilisateur est invité à poser le doigt.

Le système est dit multimode car il permet à l'utilisateur de choisir entre une commande physique et une commande virtuelle pour saisir une même donnée.

La mise en oeuvre d'un système ou d'un procédé selon l'invention permet de limiter la nécessité pour l'utilisateur de regarder les différentes commandes afin de privilégier sa mission. Cela permet à l'utilisateur d'observer le monde extérieur lors de la manipulation des commandes.

L'invention est particulièrement adaptée à des systèmes équipant des planches de bord embarquées dans des véhicules, tels que par exemple des aéronefs, des véhicules automobiles ou des trains. L'utilisateur est alors le pilote du véhicule pour lequel il est souhaitable qu'il puisse poursuivre son observation du milieu extérieur même lors d'une saisie de donnée.

La mise en oeuvre d'un procédé selon l'invention permet d'apporter de la souplesse d'utilisation en laissant à l'utilisateur un choix entre différentes commandes lui permettant de saisir une même donnée. En permettant de s'adapter aux préférences de l'utilisateur, le système mettant en oeuvre le procédé de l'invention requiert un apprentissage moindre permettant de limiter la charge cognitive de l'utilisateur.

L'invention sera mieux comprise et d'autres avantages apparaîtront à la lecture de la description détaillée d'un mode de réalisation donné à titre d'exemple, description illustrée par le dessin joint dans lequel :
les figures 1a, 1b et 1c représentent de façon schématique une interface comprenant des commandes virtuelles et des commandes physiques ;
la figure 2 représente schématiquement un système adapté à la mise en oeuvre de l'invention.

Par souci de clarté, les mêmes éléments porteront les mêmes repères dans les différentes figures.

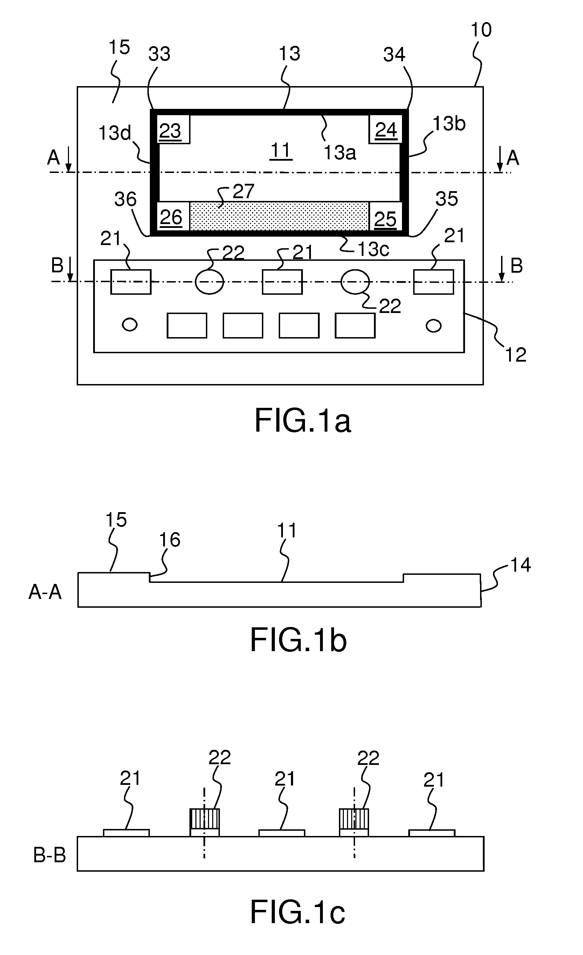

La figure 1a représente en vue de face une interface 10, par exemple destinée à équiper une planche de bord du cockpit d'un aéronef. L'interface 10 comprend un écran tactile 11 et un ensemble 12 de commandes physiques. Dans l'exemple représenté, l'écran tactile 11 possède un contour 13 rectangulaire. D'autres formes de contour sont bien entendu possibles, comme par exemple des contours circulaires ou polygonaux. Le contour 13 comprend quatre bords 13a, 13b, 13c et 13d.

La figure 1b représente l'interface 10 en coupe au niveau de l'écran tactile 11. L'interface 10 comprend un corps 14 destiné à être fixé sur la planche de bord. L'écran tactile 11 est avantageusement en creux par rapport à une face visible 15 du corps 14. Alternativement l'écran tactile 11 peut être proéminent par rapport à la face 15. Le contour 13 présente un relief 16. Le relief 16 permet à un utilisateur de localiser au toucher le contour 13 de l'écran tactile 11.

La figure 1c représente l'interface 10 en coupe au niveau de l'ensemble 12. Les commandes physiques comprennent par exemple trois boutons poussoirs 21 et deux boutons rotatifs 22. Les boutons poussoirs 21 permettent l'entrée de données binaires, et les boutons rotatifs 22 permettent l'entrée de données continues ou pseudo continues. Par donnée pseudo continue, on entend une donnée pouvant prendre plusieurs valeurs discrètes répartie sur une plage. Pour la saisie de données pseudo continue, le bouton rotatif peut être cranté.

L'écran tactile 11 affiche plusieurs commandes virtuelles 23 à 27. Les commandes 23 à 26 permettent l'entrée de données binaires et la commande 27 permet l'entrée de données continues ou pseudo continues. La commande 23 est disposée dans un coin 33 de l'écran 11, coin formant l'intersection des bords 13a et 13d. De même la commande 24 est disposée dans un coin 34 formant l'intersection des bords 13a et 13b, la commande 25 est disposée dans un coin 35 formant l'intersection des bords 13b et 13c et la commande 26 est disposée dans un coin 36 formant l'intersection des bords 13c et 13d. La commande 27 forme un curseur le long duquel l'utilisateur peut translater le doigt afin de saisir une donnée. La commande 27 est disposée le long du bord 13c.

La forme des différentes commandes 23 à 27 est visualisée sur l'écran 11. La donnée affectée à la commande peut également être affiché sur l'écran tactile 11, soit directement du la commande, soit à proximité immédiate. L'utilisateur peut regarder l'écran tactile 11 afin de guider son doigt pour lui permettre d'actionner une des commandes. Les commandes 23 à 27 étant disposées dans les coins ou le long d'un bord de l'écran 11, l'utilisateur peut aussi atteindre une des commandes en repérant sa position simplement au toucher à l'aide du relief 16. De façon plus générale les commandes virtuelles 23 à 27 sont disposées en des points remarquables de l'écran 11.

Dans l'exemple représenté, les commandes virtuelles 23 à 27 sont disposées précisément le long des bords de l'écran 11. Alternativement, un espace peut être prévu entre les commandes virtuelles 23 à 27 et les bords de l'écran 11.

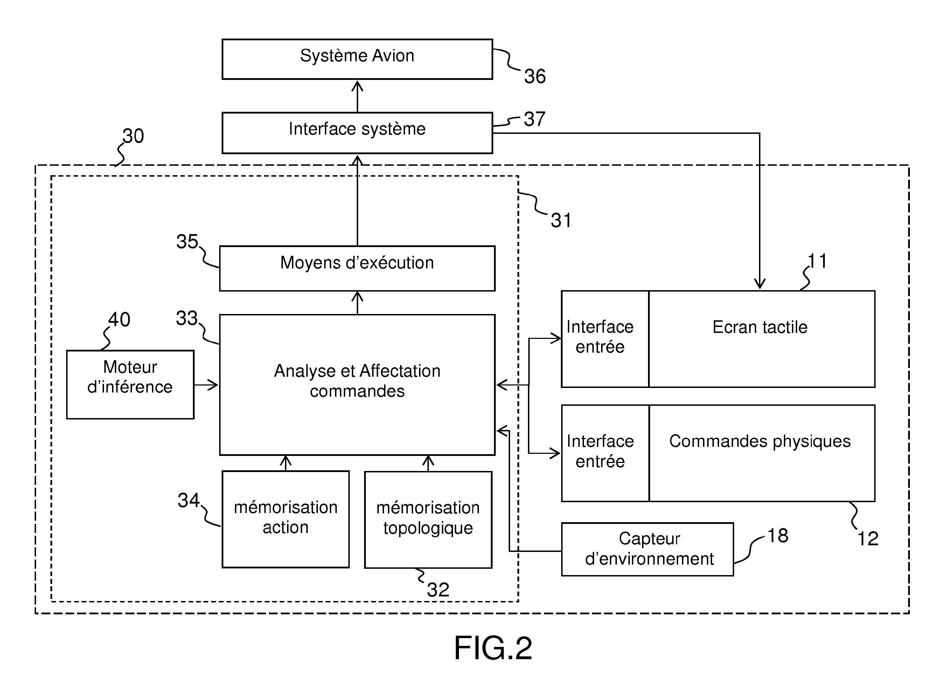

La figure 2 représente schématiquement un système 30 adapté à la mise en oeuvre de l'invention. Le système 30 comprend un calculateur 31, un capteur d'environnement, l'écran tactile 11 et l'ensemble 12 de commandes physiques. Le calculateur 31 comprend un ou plusieurs processeurs et une ou plusieurs mémoires. Un logiciel stocké en mémoire permet au processeur de dérouler un processus qui peut être décomposé en plusieurs blocs fonctionnels. Le capteur d'environnement est par exemple un accéléromètre ou un gyromètre ou une centrale inertielle. Le capteur d'environnement est notamment sensible à des vibrations pouvant intervenir dans un porteur équipé du système 30. Le capteur d'environnement peut également être un capteur de température.

Un bloc 32 appelée « mémorisation topologique » recense les différentes commandes du système 30 ainsi que leur position. La position des commandes physiques est par nature figée. En revanche la position des commandes virtuelles peut varier sur la surface de l'écran tactile 11. Il est néanmoins avantageux de figer la position de certaines commandes virtuelles afin d'améliorer l'ergonomie du système et de limiter la nécessité pour l'utilisateur de regarder les différentes commandes pour les situer. On peut par exemple utiliser des commandes virtuelles situées en des points remarquables de l'écran tactile 11 pour remplir des fonctions différentes, notamment les commandes 23 à 27.

Le bloc fonctionnel 32 inclus en particulier les points remarquables de l'écran tactile. Il tient compte en particulier de la géométrie de l'ensemble des touches par rapport à l'écran tactile, son accessibilité et la criticité des commandes. Il pourra en particulier tenir compte d'un usage par le pilote ou le copilote et par l'ensemble des deux.

Le bloc 32 adapte la topologie des commandes virtuelles à des conditions d'environnement. Par exemple le bloc 32 peut garantir la sécurité des appuis sur les commandes selon les conditions de vol et en particulier lors de vibrations importantes (par exemple à bord d'un hélicoptère) ou lors de turbulences. Par exemple, le bloc 32 peut modifier la surface occupée sur l'écran par chacune des commandes virtuelles en fonction de l'intensité des vibrations subies par le système. Pour mesurer l'intensité des vibrations, le système peut comprendre un ou plusieurs accéléromètres reliés au calculateur 31.

Un bloc 33 permet l'analyse et l'affectation des commandes physiques et virtuelles. D'une part, le bloc 33 affecte des données à saisir à des commandes virtuelles et physiques. D'autre part le bloc 33 reçoit les informations saisies par l'utilisateur au moyen des commandes qui ont été affectées.

Un bloc 34 appelé « mémorisation action » définit les actions à entreprendre en fonction de la valeur de chaque donnée saisie. Après analyse d'une valeur d'une donnée reçue, le bloc 33 interroge le bloc 34 pour définir l'action à entreprendre. Il définit en particulier des séquences information-décision-action, en tenant compte des conditions et de la phase du vol ou de la mission. Le bloc 34 fonctionne avantageusement à partir de schèmes qui sont définis comme des structures ou des organisations des actions telles qu'elles se transforment ou se généralisent lors de la répétition de ces actions en des circonstances semblables ou analogues. Il est notamment possible de tenir compte de l'apprentissage et/ou de l'expertise de l'utilisateur, par exemple à partir d'une mesure de son temps de réaction à manipuler certaines commandes, à partir de sa récurrence à utiliser une commande plutôt qu'une autre lorsqu'un choix lui est proposé...

Un bloc 35 appelé « moyen d'exécution » entreprend l'action définie au bloc 33 et la transmet vers l'extérieur du système 30 et plus précisément vers un système avion 36, éventuellement au travers d'une interface système 37.

Le système 30 comprend également un bloc 40 appelé « moteur d'inférence » qui définit des règles contextuelles d'affectation des commandes. Le moteur d'inférence 40 est relié au bloc 33. Le moteur d'inférence 40 définit notamment les règles d'affectations futures des commandes en fonction d'actions passées.

Le moteur d'inférence 40 permet de rechercher automatiquement des règles à appliquer compte tenu de la commande à effectuer par l'opérateur sans qu'elles soient entièrement figées dans le système. Il est constitué d'un ensemble de règles logiques déductives de type « si-alors ». Les conditions permettant de modifier les règles peuvent être la phase de vol, l'expertise de l'utilisateur, l'utilisation pilote ou copilote ou des deux... Cet ensemble de règles doit garantir la sécurité des actions d'entrées de données en particulier selon divers niveaux d'expertises requis pour l'utilisateur et la phase implicite de vol ou de mission dans laquelle il se trouve. A titre d'exemple une phase d'atterrissage qui demande une vision du monde extérieur plus importante doit permettre l'utilisation de commande en aveugle, c'est-à-dire sans regarder la commande : écran tactile ou commande physique.

Selon l'invention, une donnée à saisir est affectée à plusieurs commandes. L'utilisateur conserve ainsi le choix pour saisir la donnée concernée d'utiliser une commande ou une autre selon ses préférences. Plus précisément, l'utilisateur conserve choix d'utiliser une commande physique ou une commande virtuelle. Par exemple, pour saisir une donnée continue, le moteur d'inférence peut définir l'affectation de cette donnée à la fois à la commande virtuelle 27 et à un des boutons rotatifs 22. Par exemple pour régler un volume sonore, l'utilisateur a le choix d'utiliser soit le curseur formé par la commande virtuelle 27 soit le bouton rotatif 22 retenu.

Avantageusement, on utilise une des commandes virtuelles disposée en un point remarquable de l'écran tactile 11 pour la définition de l'affectation de la donnée aux différentes commandes. Par exemple, pour piloter la réception radio, la commande 23 permet d'entrer dans un mode de sélection de fréquence. Le choix de la fréquence est ensuite réalisé soit avec la commande virtuelle 27 soit avec un bouton rotatif 22. Si le choix des fréquences ne peut pas être fait au moyen d'un curseur, du fait du trop grand nombre de fréquences possibles, un clavier numérique peut apparaitre sur l'écran tactile 11. Il est cependant possible de conserver un des boutons rotatif, par exemple s'il s'agit d'un bouton cranté pour la saisie de la fréquence. L'utilisateur a alors le choix entre un clavier numérique virtuel et un bouton cranté.

Une fois la fréquence saisie, un autre point remarquable peut être utilisé pour entrer dans un mode de choix du volume sonore de la radio. Par exemple, l'entrée dans ce mode est réalisée au moyen de la commande 24. Dans ce mode, le réglage du volume peut également être fait par les mêmes commandes que celles utilisées pour le choix de la fréquence : la commande virtuelle 27 et le bouton rotatif 22 précédemment utilisé.

## Revendications

1. Procédé d'entrée de donnée mettant en oeuvre un système (30) comprenant des commandes physiques (21, 22), un capteur d'environnement (18) et un écran tactile (11) affichant des commandes virtuelles (23, 24, 25, 26, 27), le procédé consistant à définir et afficher au moins une commande virtuelle sur l'écran tactile (11) et à affecter une donnée à saisir à une des commandes, **caractérisé en ce que** la donnée à saisir est affectée à la fois à une première des commandes physiques (22) et à une première des commandes virtuelles (27) et **en ce qu'**on adapte la topologie des commandes virtuelles (23, 24, 25, 26, 27) à des conditions d'environnement.

2. Procédé selon la revendication 1, **caractérisé en ce qu'**une seconde des commandes virtuelles (23, 24, 25, 26, 27) est affichée à une position prédéfinie de l'écran tactile (11), position située sensiblement le long d'un bord (13a, 13b, 13c, 13d) de l'écran tactile (11) et **en ce que** l'affectation de la donnée est définie au moyen de la seconde des commandes virtuelles.

3. Procédé selon la revendication 2, **caractérisé en ce que** le bord (13a, 13b, 13c, 13d) de l'écran tactile (11) présente un relief (15).

4. Procédé selon l'une quelconque des revendications 2 ou 3, **caractérisé en ce que** l'écran tactile (11) possède un contour rectangulaire (13) et **en ce que** la seconde des commandes virtuelles est affichée sensiblement dans un des coins (33, 34, 35, 36) du contour rectangulaire (13).

5. Procédé selon l'une des revendications précédentes, **caractérisé en ce que** la donnée à saisir est une donnée continue ou pseudo continue et **en ce que** la commande virtuelle (27) forme un curseur s'étendant le long d'un contour (13) de l'écran tactile (11).

6. Procédé selon les revendications 4 et 5, **caractérisé en ce que** le curseur (27) s'étend le long d'un coté (13c) du contour de l'écran tactile (11).

7. Procédé selon l'une des revendications précédentes, **caractérisé en ce que** la donnée à saisir est une donnée continue ou pseudo continue et **en ce que** la commande physique comprend un bouton rotatif (22).

8. Système comprenant un calculateur (31), des commandes physiques (21, 22), un capteur d'environnement (18) et un écran tactile (11) affichant des commandes virtuelles (23, 24, 25, 26, 27), les commandes physiques (21, 22) et l'écran tactile (11) étant reliés au calculateur (31), **caractérisé en ce que** le calculateur (31) est configuré pour mettre en oeuvre un moteur d'inférence (40) définissant des règles contextuelles d'affectation des commandes à des données à saisir, au moins une des données à saisir étant affectée à la fois à une première des commandes physiques (22) et à une première des commandes virtuelles (27) et **en ce que** le calculateur (31) est configuré pour adapter la topologie des commandes virtuelles (23, 24, 25, 26, 27) à des conditions d'environnement mesurées par le capteur d'environnement (18).

9. Système selon la revendication 8, **caractérisé en ce que** le calculateur (31) est configuré pour mettre en oeuvre un bloc de mémorisation topologique (32) recensant les différentes commandes (21, 22, 23, 24, 25, 26, 27) du système (30) ainsi que leur position.

10. Système selon la revendication 9, **caractérisé en ce que** le bloc de mémorisation topologique (32) mémorise des positions de commandes virtuelles (23, 24, 25, 26, 27) situées sensiblement le long d'un bord (13a, 13b, 13c, 13d) de l'écran tactile (11).

11. Système selon l'une des revendications 8 à 10, **caractérisé en ce que** le calculateur (31) est configuré pour mettre en oeuvre un bloc de mémorisation d'actions (34) définissant les actions à entreprendre en fonction de la valeur de chaque donnée saisie, et **en ce que** le bloc de mémorisation d'actions (34) fonctionne à partir de schèmes définis comme des structures ou des organisations des actions pouvant se transformer ou se généraliser lors de la répétition d'actions en des circonstances semblables ou analogues.
